# EUROPÄISCHE PATENTSCHRIFT

(11) **EP 1 213 718 B1**
(45) Veröffentlichungstag und Bekanntmachung des Hinweises auf die Patenterteilung: **12.09.2007**
(21) Anmeldenummer: 01128437.9
(22) Anmeldetag: 05.12.2001
(51) Int. Cl.: G11B 15/10

(54) **Vorrichtung zur Eingabe von Bedienbefehlen bei einem Aufzeichnungs-/Wiedergabegerät**
Device for entering control instructions in a recording/reproducing apparatus
Dispositif d'introduction de commandes de fonctionnement dans un appareil d'enregistrement/reproduction

(30) Priorität: 09.12.2000 DE 10061453
(43) Veröffentlichungstag der Anmeldung: 12.06.2002
(73) Patentinhaber: Grundig Multimedia B.V., 1083HJ Amsterdam (NL)
(72) Erfinder: Braig, Rudolf, 90471 Nürnberg (DE)
(74) Vertreter: Pröll, Jürgen

(56) Entgegenhaltungen:
- EP-A- 0 231 659
- GB-A- 2 252 194
- US-A- 4 728 949
- US-A- 5 644 303

## Beschreibung

Die Erfindung betrifft eine Vorrichtung zur Eingabe von Bedienbefehlen bei einem Aufzeichnungs-/Wiedergabe-Gerät, beispielsweise einem Videorecorder oder einem Audiorecorder.

Es ist bereits bekannt, mittels der Tastatur eines Fembedienungsgebers oder mittels einer am Gerätegehäuse angeordneten Bedientastatur Bedienbefehle für einen Videorecorder einzugeben.

Die genannten Tastaturen weisen üblicherweise Funktionstasten und Zifferntasten auf. Die mittels der Funktionstasten eingegebenen Befehle werden in einem Coder in codierte Befehlssignale umgewandelt und zur Auslösung einer jeweils gewünschten Betriebsart verwendet.

Weiterhin ist es bereits bekannt, einen Videorecorder mit unterschiedlichen Bildsuchlaufgeschwindigkeiten zu betreiben. Bei Bildsuchlaufvorgängen bleibt das Magnetband des Videorecorders eingefädelt, so dass der Zuschauer während des Bildsuchlaufes den Bildinhalt am Bildschirm eines an den Videorecorder angeschlossenen Fernsehempfänger betrachten kann. Ein Bildsuchlauf in Vorwärtsrichtung mit einer ersten Geschwindigkeit wird durch eine einmalige Betätigung einer zugehörigen Bildsuchlauftaste ausgelöst. Ein Bildsuchlauf in Vorwärtsrichtung mit einer zweiten Geschwindigkeit wird durch zweimalige, kurz hintereinander erfolgende Betätigung der zugehörigen Bildsuchlauftaste ausgelöst.

Aus GB-A-2 252 194 sind ein Verfahren zum Betrieb eines Videorecorders mit zwei Bandlaufwerken, sowie ein dieses Verfahren nutzender Videorecorder offenbart. Der Videorecorder weist eine automatische Kopierfunktion von einem ersten Aufzeichnungsband eines ersten Laufwerks auf ein zweites Aufzeichnungsband eines zweiten Laufwerks auf. Zur Spezifizierung der vom ersten Aufzeichnungsband des ersten Laufwerks auf das zweite Aufzeichnungsband des zweiten Laufwerks überspeichernden/übertragenden Sendeinhalte, wird ein Sendeinhalt auf dem Aufzeichnungsband des ersten Laufwerks mittels der Bedieneinheit ausgewählt. Hierzu wird über die Bedieneinheit eine Steuertaste angewählt, und in Abhängigkeit dieser dann die einzelnen Positionen, welche übertragen werden, spezifiziert.

Der Erfindung liegt die Aufgabe zugrunde, eine Vorrichtung zur Eingabe von Bedienbefehlen bei einem Aufzeichnungs-/Wiedergabe-Gerät anzugeben, deren Befehlseingabemöglichkeiten erweitert sind.

Diese Aufgabe wird durch eine Vorrichtung mit den im Anspruch 1 angegebenen Merkmalen gelöst. Vorteilhafte Ausgestaltungen und Weiterbildung der Erfindung ergeben sich aus den abhängigen Ansprüchen.

Die Vorteile der Erfindung bestehen insbesondere darin, dass durch die zusätzliche Verwendung der ohnehin vorhandenen Zifferntasten einer Bedientastatur eine Vielzahl zusätzlicher Bedienbefehle eingebbar ist, die bisher nur unter Verwendung zusätzlicher Tasten oder gar nicht eingebbar waren. Die Eingabe der zusätzlichen Bedienbefehle ist leicht erlernbar, da die jeweiligen Funktionen und die Tasten, mittels derer sie ausgelöst werden, als solche in vielen Fällen bereits bekannt sind, beispielsweise die mittels der Wiedergabetaste auslösbare Wiedergabefunktion. Die zusätzliche Verwendung der Zifferntaste spezifiziert lediglich die ausgelöste Funktion näher, beispielsweise in Form einer Vorgabe der Wiedergabegeschwindigkeit.

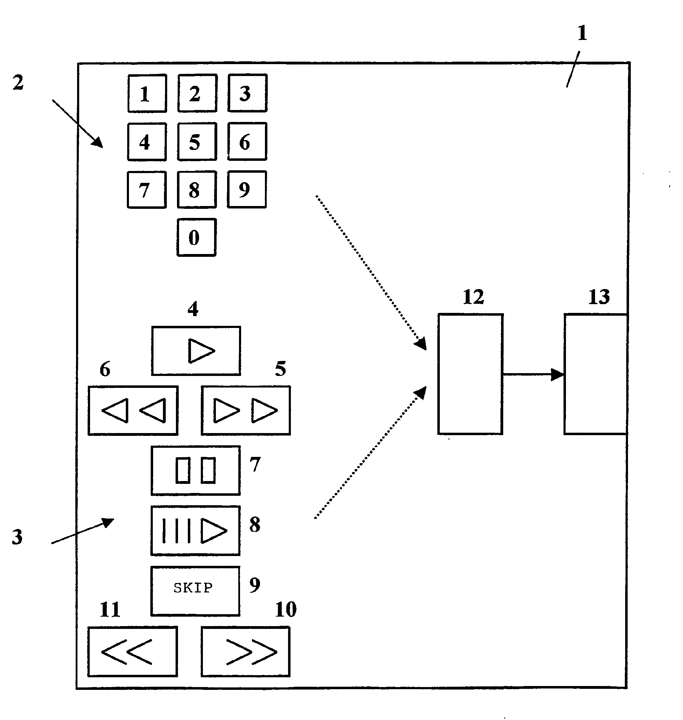

Weitere vorteilhafte Eigenschaften der Erfindung ergeben sich aus der Erläuterung eines Ausführungsbeispiels anhand der Figur. Diese zeigt die zum Verständnis der Erfindung notwendigen Bestandteile einer Vorrichtung zur Eingabe von Bedienbefehlen bei einem Videorecorder. Bei dieser Vorrichtung handelt es sich um einen Fernbedienungsgeber 1.

Dieser weist einen Tastenblock 2 auf, welcher die Zifferntasten 0, 1, 2, 3, 4, 5, 6, 7, 8, 9 enthält. Weiterhin ist der gezeigte Fernbedienungsgeber mit einem Tastenblock 3 versehen, welchem Funktionstasten angehören. Zu diesen Funktionstasten gehören eine Wiedergabe- bzw. Playtaste 4, eine Vorwärts-Suchlauftaste 5, eine Rückwärts-Suchlauftaste 6, eine Pausentaste 7, eine Zeitlupentaste 8, eine Skip-Taste 9, eine Vorwärts-Umspultaste 10 und eine Rückwärts-Umspultaste 11.

Ferner ist der gezeigte Fernbedienungsgeber mit einem Befehlscoder 12 versehen. Dieser erkennt die mittels der Tastatur eingegebenen Befehle und wandelt sie in ein codiertes Befehlssignal um. Dieses codierte Befehlssignal wird an einen Infrarot-Sender 13 weitergeleitet und von diesem aus an den Videorecorder ausgesandt. Dort wird das Infrarotsignal von einem Infrarot-Empfänger detektiert und an eine Steuereinheit weitergeleitet. Diese wiederum leitet im Videorecorder durch Ansteuerung der Stellglieder, etc., die Umsetzung der eingegeben Befehle in die Wege.

Durch eine einfache Betätigung einer der Funktionstasten ist wie bei bekannten Videorecordern ein der jeweiligen Funktionstaste zugehöriger Bedienbefehl eingebbar. Wird die Wiedergabetaste 4 betätigt, so wird dies vom Coder 12 erkannt und in ein codiertes Befehlssignal umgewandelt, welches einen Wiedergabebetrieb mit Normalgeschwindigkeit spezifiziert. Wird die Vorwärts-Suchlauftaste 5 betätigt, so wird dies vom Coder 12 erkannt und in ein codiertes Befehlssignal umgewandelt, welches einen Suchlaufbetrieb in Vorwärtsrichtung beispielsweise mit dreifacher Geschwindigkeit spezifiziert. Wird die Rückwärts-Suchlauftaste 6 betätigt, so wird dies vom Coder 12 erkannt und in ein codiertes Befehlssignal umgewandelt, welches einen Suchlaufbetrieb in Rückwärtsrichtung beispielsweise mit dreifacher Geschwindigkeit spezifiziert. Wird die Pausentaste 7 betätigt, so wird dies vom Coder 12 erkannt und in ein codiertes Befehlssignal umgewandelt, welches den Videorecorder in den Pausenbetrieb bringt. Wird die Zeitlupentaste 8 betätigt, so wird dies vom Coder 12 erkannt und in ein codiertes Befehlssignal umgewandelt, welches einen Zeitlupenbetrieb mit beispielsweise einem Drittel der Normalgeschwindigkeit spezifiziert. Wird die Skip-Taste 9 betätigt, so wird dies vom Coder 12 erkannt und in ein codiertes Befehlssignal umgewandelt, welches einen Skip-Betrieb des Videorecorders spezifiziert. Wird die Vorwärts-Umspultaste 10 betätigt, so wird dies vom Coder 12 erkannt und in ein codiertes Befehlssignal umgewandelt, welches einen Umspulbetrieb in Vorwärtsrichtung beispielsweise mit 20-facher Normalgeschwindigkeit spezifiziert. Wird die Rückwärts-Umspultaste 11 betätigt, so wird dies vom Coder 12 erkannt und in ein codiertes Befehlssignal umgewandelt, welches einen Umspulbetrieb in Rückwärtsrichtung beispielsweise mit 20-facher Normalgeschwindigkeit spezifiziert.

Darüber hinaus sind erfindungsgemäß durch eine gemeinsame Betätigung einer Funktionstaste und einer Zifferntaste weitere Befehlssignale eingebbar, welche eine Betriebsart des Videorecorders mit zugehöriger Wiedergabestartposition und/oder zugehöriger Geschwindigkeit spezifizieren, wie nachfolgend erläutert wird. Eine gemeinsame Betätigung einer Funktionstaste und einer Zifferntaste bedeutet dabei entweder eine gleichzeitige Betätigung einer Funktionstaste und einer Zifferntaste oder eine zeitlich kurz hintereinander erfolgende Betätigung einer Funktionstaste und einer Zifferntaste.

Wird die Wiedergabetaste 4 gemeinsam mit der Zifferntaste 2 betätigt, so wird dies - wie es durch die gestrichelten Pfeile in der Figur angedeutet ist - vom Coder 12 erkannt und in ein codiertes Befehlssignal umgewandelt, welches eine Wiedergabe mit doppelter Geschwindigkeit spezifiziert. Wird die Wiedergabetaste 4 gemeinsam mit der Zifferntaste 3 betätigt, so wird dies vom Coder 12 erkannt und in ein codiertes Befehlssignal umgewandelt, welches eine Wiedergabe mit dreifacher Geschwindigkeit spezifiziert. Wird die Wiedergabetaste 4 gemeinsam mit der Zifferntaste 4 betätigt, so wird dies vom Coder 12 erkannt und in ein codiertes Befehlssignal umgewandelt, welches eine Wiedergabe mit vierfacher Geschwindigkeit spezifiziert.

Wird die Vorwärts-Suchlauftaste 5 gemeinsam mit der Zifferntaste 5 betätigt, so wird dies vom Coder 12 erkannt und in ein codiertes Befehlssignal umgewandelt, welches einen Vorwärts-Suchlaufbetrieb mit fünffacher Geschwindigkeit spezifiziert. Wird die Vorwärts-Suchlauftaste 5 gemeinsam mit der Zifferntaste 6 betätigt, so wird dies vom Coder 12 erkannt und in ein codiertes Befehlssignal umgewandelt, welches einen Vorwärts-Suchlaufbetrieb mit sechsfacher Geschwindigkeit spezifiziert.

Wird die Rückwärts-Suchlauftaste 6 gemeinsam mit der Zifferntaste 5 betätigt, so wird dies vom Coder 12 erkannt und in ein codiertes Befehlssignal umgewandelt, welches einen Rückwärts-Suchlaufbetrieb mit fünffacher Geschwindigkeit spezifiziert. Wird die Rückwärts-Suchlauftaste 6 gemeinsam mit der Zifferntaste 6 betätigt, so wird dies vom Coder 12 erkannt und in ein codiertes Befehlssignal umgewandelt, welches einen Rückwärts-Suchlaufbetrieb mit sechsfacher Geschwindigkeit spezifiziert.

Wird die Zeitlupentaste 8 gemeinsam mit der Zifferntaste 2 betätigt, so wird dies vom Coder 12 erkannt und in ein codiertes Befehlssignal umgewandelt, welches einen Zeitlupenbetrieb mit halber Normalgeschwindigkeit spezifiziert. Wird die Zeitlupentaste 8 gemeinsam mit der Zifferntaste 4 betätigt, so wird dies vom Coder 12 erkannt und in ein codiertes Befehlssignal umgewandelt, welches einen Zeitlupenbetrieb mit einem Viertel der Normalgeschwindigkeit spezifiziert.

Bei den vorstehend beschriebenen Ausführungsbeispielen wurde jeweils eine der Zifferntasten dazu verwendet, die Geschwindigkeit in einer durch eine Funktionstaste bestimmten Betriebsart vorzugeben.

Alternativ dazu wird gemäß einer anderen Ausführungsform der Erfindung die mittels einer Zifferntaste getätigte Vorgabe zur Durchführung von definierten zeitlichen Sprüngen verwendet.

Wird beispielsweise die Vorwärts-Umspultaste 10 gemeinsam mit der Zifferntaste 5 betätigt, so wird dies vom Coder 12 erkannt und in ein codiertes Befehlssignal umgewandelt, welches ausgehend von der momentanen Bandposition einen Vorwärtssprung, der einer Spielzeit von fünf Minuten entspricht, und eine darauffolgende Wiedergabe mit Normalgeschwindigkeit ab dieser Stelle spezifiziert.

Wird die Rückwärts-Umspultaste 11 gemeinsam mit der Zifferntaste 5 betätigt, so wird dies vom Coder 12 erkannt und in ein codiertes Befehlssignal umgewandelt, welches ausgehend von der momentanen Bandposition einen Rückwärtssprung, der einer Spielzeit von fünf Minuten entspricht, und eine darauffolgende Wiedergabe mit Normalgeschwindigkeit ab dieser Stelle spezifiziert.

Gemäß einer weiteren Ausführungsform der Erfindung wird die mittels einer Zifferntaste getätigte Vorgabe zur Durchführung von definierten Sprüngen zu vorgegebenen Startpunkten verwendet.

Wird beispielsweise die Wiedergabe- bzw. Playtaste 4 gemeinsam mit der Zifferntaste 3 betätigt, so wird dies vom Coder 12 erkannt und in ein codiertes Befehlssignal umgewandelt, welches einen Sprung an eine vom Benutzer selbst während der Aufzeichnung definierte Bandstelle Nr. 3 spezifiziert. Diese grundsätzliche Vorgehensweise ermöglicht es dem Benutzer, während der Aufzeichnung eines Fußballspiels beispielsweise Torszenen zu markieren, wobei jeder Torszene eine laufende Nummer zugeordnet wird. Bei der Wiedergabe der Aufzeichnung besteht dann die Möglichkeit, die markierten Szenen durch eine gemeinsame Betätigung der Playtaste 4 und der jeweiligen Zifferntaste nacheinander anzuspringen und nochmals in Normalgeschwindigkeit abzuspielen.

Anstelle der gemeinsamen Betätigung der Wiedergabe- bzw. Playtaste 4 mit einer Zifferntaste kann das vorstehend beschriebene Springen an eine vom Benutzer selbst während der Aufzeichnung definierte Bandstelle auch nach einer gemeinsamen Betätigung einer anderen Funktionstaste und einer Zifferntaste erfolgen, beispielsweise der Pausentaste 7 und einer Zifferntaste.

Ein weiteres Ausführungsbeispiel für die Erfindung besteht darin, die Skip-Taste 9 gemeinsam mit einer Zifferntaste zu betätigen, beispielsweise der Zifferntaste 7. In diesem Fall erkennt der Coder 12, dass ein Sprung von der momentanen Bandstelle aus, beispielsweise der Bandstelle Nr. 5, an die neue Bandstelle 5 + 7 = 12 durchgeführt werden soll, um die selbst markierte Szene Nr. 12 mit Normalgeschwindigkeit wiederzugeben, und erzeugt ein entsprechend codiertes Befehlssignal.

## Patentansprüche

1. Vorrichtung zur Eingabe von Bedienbefehlen bei einem Aufzeichnungs-/Wiedergabe-Gerät, mit einer Tastatur, welche Funktionstasten und Zifferntasten aufweist, und einem Befehlscoder, der mittels der Tastatur eingegebene Befehle erkennt und in ein codiertes Befehlssignal umwandelt,
wobei der Befehlscoder (12) bei einer gemeinsamen Betätigung einer Funktionstaste (4-11) und einer Zifferntaste (0 - 9) ein codiertes Befehlssignal erzeugt, **dadurch gekennzeichnet, dass** das Befehlssignal eine Betriebsart des Aufzeichnungs-/Wiedergabegerätes mit zugehöriger Wiedergabegeschwindigkeit spezifiziert.

2. Vorrichtung nach Anspruch 1,
**dadurch gekennzeichnet, dass**
die Betriebsart des Aufzeichnungs-/Wiedergabegerätes eine zugehörige Wiedergabestartposition auf dem Aufzeichnungsträger spezifiziert.

3. Vorrichtung nach Anspruch 1 oder 2,
**dadurch gekennzeichnet, dass**
der Befehlscoder (12) eine gemeinsame Betätigung einer Funktionstaste und einer Zifferntaste dann detektiert, wenn die Funktionstaste und die Zifferntaste entweder gleichzeitig oder zeitlich kurz hintereinander betätigt werden.

4. Vorrichtung nach einem der Ansprüche 1 bis 3,
**dadurch gekennzeichnet, dass**
der Befehlscoder (12) bei einer gemeinsamen Betätigung einer Vorwärts- oder Rückwärts-Umspultaste (10, 11) und einer Zifferntaste ein codiertes Befehlsignal erzeugt, welches die Umspulgeschwindigkeit eines bandförmigen Aufzeichnungsträgers spezifiziert.

5. Vorrichtung nach einem der Ansprüche 1 bis 4,
**dadurch gekennzeichnet, dass**
der Befehlscoder (12) bei einer gemeinsamen Betätigung der Playtaste (4) und einer Zifferntaste ein codiertes Befehlssignal erzeugt, welches die Wiedergabegeschwindigkeit spezifiziert.

6. Vorrichtung nach einem der Ansprüche 1 bis 4,
**dadurch gekennzeichnet, dass**
der Befehlscoder (12) bei einer gemeinsamen Betätigung der Zeitlupentaste (8) und einer Zifferntaste ein codiertes Befehlssignal erzeugt, welches die Zeitlupengeschwindigkeit spezifiziert.

7. Vorrichtung nach einem der Ansprüche 1 bis 4,
**dadurch gekennzeichnet, dass**
der Befehlscoder (12) bei einer gemeinsamen Betätigung einer Bildsuchlauftaste (5, 6) und einer Zifferntaste ein codiertes Befehlssignal erzeugt, welches die Bildsuchlaufgeschwindigkeit spezifiziert.

8. Vorrichtung nach einem der Ansprüche 1 bis 3,
**dadurch gekennzeichnet, dass**
der Befehlscoder (12) bei einer gemeinsamen Betätigung einer Vorwärts- oder Rückwärts-Umspultaste (10, 11) und einer Zifferntaste ein codiertes Befehlssignal erzeugt, welches einen durch die eingegebene Ziffer definierten zeitlichen Sprung zu einer anderen Wiedergabestartposition auf dem Aufzeichnungsträger spezifiziert.

9. Vorrichtung nach einem der Ansprüche 1 bis 3,
**dadurch gekennzeichnet, dass**
der Befehlscoder (12) bei einer gemeinsamen Betätigung der Playtaste (4) und einer Zifferntaste ein codiertes Befehlssignal erzeugt, welches einen durch die eingegebene Ziffer definierten Sprung zu einer von mehreren markierten Stellen des Aufzeichnungsträgers spezifiziert.

10. Vorrichtung nach einem der Ansprüche 1 bis 3,
**dadurch gekennzeichnet, dass**
der Befehlscoder(12) bei einer gemeinsamen Betätigung der Pausentaste (7) und einer Zifferntaste ein codiertes Befehlssignal erzeugt, welches einen durch die eingegebene Ziffer definierten Sprung zu einer von mehreren markierten Stellen des Aufzeichnungsträgers spezifiziert.

11. Vorrichtung nach einem der Ansprüche 1 bis 3,
**dadurch gekennzeichnet, dass**
der Befehlscoder (12) bei einer gemeinsamen Betätigung der Skiptaste (9) und einer Zifferntaste ein codiertes Befehlssignal erzeugt, welches einen durch die eingegebene Ziffer definierten Sprung zu einer von mehreren markierten Stellen des Aufzeichnungsträgers spezifiziert.

## Claims

1. Device for entering operating commands for a recording/reproduction device, with a keypad, which has function keys and digit keys, and a command encoder, which recognises commands which are entered by means of the keypad and converts them into an encoded command signal,
the command encoder (12) generating an encoded command signal in the case of joint operation of a function key (4 - 11) and a digit key (0- 9), **characterized in that** the command signal specifies the operating mode of the recording/reproduction device with associated reproduction speed.

2. Device according to Claim 1,
**characterized in that**
the operating mode of the recording/reproduction device specifies an associated reproduction start position on the recording medium.

3. Device according to Claim 1 or 2,
**characterized in that**
the command encoder (12) detects joint operation of a function key and a digit key when the function key and digit key are operated either simultaneously or one shortly after the other.

4. Device according to one of Claims 1 to 3,
**characterized in that**
in the case of joint operation of a forward or backward winding key (10, 11) and a digit key, the command encoder (12) generates an encoded command signal which specifies the winding speed of a recording medium in the form of a tape.

5. Device according to one of Claims 1 to 4,
**characterized in that**
in the case of joint operation of the play key (4) and a digit key, the command encoder (12) generates an encoded command signal which specifies the reproduction speed.

6. Device according to one of Claims 1 to 4,
**characterized in that**
in the case of joint operation of the slow motion key (8) and a digit key, the command encoder (12) generates an encoded command signal which specifies the slow motion speed.

7. Device according to one of Claims 1 to 4,
**characterized in that**
in the case of joint operation of a review key (5, 6) and a digit key, the command encoder (12) generates an encoded command signal which specifies the review speed.

8. Device according to one of Claims 1 to 3,
**characterized in that**
in the case of joint operation of a forward or backward winding key (10, 11) and a digit key, the command encoder (12) generates an encoded command signal which specifies a temporal jump, which is defined by the entered digit, to a different reproduction start position on the recording medium.

9. Device according to one of Claims 1 to 3,
**characterized in that**
in the case of joint operation of the play key (4) and a digit key, the command encoder (12) generates an encoded command signal which specifies a jump, which is defined by the entered digit, to one of several marked positions of the recording medium.

10. Device according to one of Claims 1 to 3,
**characterized in that** in the case of joint operation of the pause key (7) and a digit key, the command encoder (12) generates an encoded command signal which specifies a jump, which is defined by the entered digit, to one of several marked positions of the recording medium.

11. Device according to one of Claims 1 to 3,
**characterized in that**
in the case of joint operation of the skip key (9) and a digit key, the command encoder (12) generates an encoded command signal which specifies a jump, which is defined by the entered digit, to one of several marked positions of the recording medium.

## Revendications

1. Dispositif de saisie de commandes de fonctionnement dans un appareil d'enregistrement/reproduction, comportant un clavier, qui présente des touches de fonction et des touches numériques et un codeur de commande, qui reconnaît les commandes saisies grâce au clavier et les convertit en un signal codé de commande, dans lequel
le codeur de commandes (12) qui génère un signal de commande codé lors d'un actionnement conjoint d'une touche de fonction (4-11) et d'une touche numérique (0-9), **caractérisé en ce que**
le signal de commande spécifie un type de fonctionnement de l'appareil d'enregistrement/reproduction avec une vitesse de reproduction associée.

2. Dispositif selon la revendication 1, **caractérisé en ce que** le type de fonctionnement de l'appareil d'enregistrement/reproduction spécifie une position de départ de reproduction associée sur le support d'enregistrement.

3. Dispositif selon la revendication 1 ou 2, **caractérisé en ce que** le codeur de commande (12) détecte un actionnement conjoint d'une touche de fonction et d'une touche numérique, lorsque les touches de fonction et les touches numériques sont actionnées soit simultanément soit rapidement l'une après l'autre.

4. dispositif selon l'une des revendications 1 à 3, **caractérisé en ce que** le codeur de commande (12) génère, lors d'un actionnement conjoint d'une touche de rembobinage vers l'avant ou vers l'arrière (10, 11) et d'une touche numérique, un signal de commande codé, qui spécifie la vitesse de rembobinage d'un support d'enregistrement sous forme de bande.

5. Dispositif selon l'une des revendications 1 à 4, **caractérisé en ce que** le codeur de commande (12) génère, lors de l'actionnement conjoint de la touche de lecture (4) et d'une touche numérique, un signal de commande codé, qui spécifie la vitesse de reproduction.

6. Dispositif selon l'une des revendications 1 à 4, **caractérisé en ce que** le codeur de commande (12) génère, lors de l'actionnement conjoint de la touche de ralenti (8) et d'une touche numérique, un signal de commande codé, qui spécifie la vitesse de ralenti.

7. Dispositif selon l'une des revendications 1 à 4, le codeur de commande (12) génère, lors de l'actionnement conjoint d'une touche de recherche d'image (5, 6) et d'une touche numérique, un signal de commande codé, qui spécifie la vitesse de recherche d'image.

8. Dispositif selon l'une des revendications 1 à 3, **caractérisé en ce que** le codeur de commande (12), génère lors de l'actionnement conjoint d'une touche de rembobinage vers l'avant ou vers l'arrière (10, 11) et d'une touche numérique, un signal de commande codé, qui spécifie un saut temporel défini par le chiffre saisi à une autre position de départ de reproduction sur le support d'enregistrement.

9. Dispositif selon l'une des revendications 1 à 3, **caractérisé en ce que** le codeur de commande (12) génère, lors d'un actionnement conjoint de la touche de lecture (4) et d'une touche numérique, un signal de commande codé, qui spécifie un saut défini par le chiffre saisi à l'un de plusieurs endroits repérés du support d'enregistrement.

10. Dispositif selon l'une des revendications 1 à 3, **caractérisé en ce que** le codeur de commande (12) génère, lors de l'actionnement commun de la touche pause (7) et d'une touche numérique, un signal de commande codé, qui spécifie un saut défini par le chiffre saisi à l'un de plusieurs endroits repérés du support d'enregistrement.

11. Dispositif selon l'une des revendications 1 à 3, **caractérisé en ce que** le codeur de commande (12) génère, lors de l'actionnement conjoint de la touche de saut (9) et d'une touche numérique, un signal de commande codé qui spécifie un saut défini par un chiffre saisi à l'un de plusieurs endroits repérés du support d'enregistrement.
